# FASCICULE DE BREVET EUROPEEN

(11) **EP 2 252 559 B1**
(45) Date de publication et mention de la délivrance du brevet: **23.10.2019**
(21) Numéro de dépôt: 09727258.7
(22) Date de dépôt: 12.03.2009
(51) Int. Cl.: C04B 7/32, C04B 7/44, F27B 1/00, F27B 9/02, F27B 9/12, F27B 9/26, F27B 9/36, C04B 7/38, C04B 7/43

(54) **PROCEDE DE FABRICATION D'UN CLINKER SULFO-ALUMINEUX OU SULFO-ALUMINEUX-BELITIQUE**
VERFAHREN ZUR HERSTELLUNG EINES SULFOALUMINAT- ODER BELIT-SULFOALUMINATKLINKERS
PROCESS FOR MANUFACTURING A SULFOALUMINATE OR BELITE-SULFOALUMINATE CLINKER

(30) Priorité: 14.03.2008 FR 0801414
(43) Date de publication de la demande: 24.11.2010
(73) Titulaire: Vicat, 92095 Paris La Défense (FR)
(72) Inventeur: JACOB, Yvan-Pierre, F-73330 Le Pont de Beauvoisin (FR); CROCE, Jacques, F-38380 Saint Laurent du Pont (FR); BEAUVENT, Guy, F-62720 Wierre Effroy (FR); DE LA FOUCHARDIERE, René, F-3000 Nimes (FR); RENIE, Dominique, F-38500 Coublevie (FR)
(74) Mandataire: Verriest, Philippe
(86) Numéro de dépôt international: PCT/FR2009/050411
(87) Numéro de publication internationale: WO 2009/122065

(56) Documents cités:
- EP-A- 1 260 489
- WO-A1-02/094732
- DE-A1- 2 405 413
- FR-A- 1 253 566
- FR-A1- 2 873 366
- GB-A- 358 621
- GB-A- 624 032
- US-A- 4 367 095
- US-A- 5 188 668

## Description

L'invention concerne un procédé de fabrication d'un clinker sulfo-alumineux ou sulfo-alumineux-bélitique ainsi qu'une installation correspondante.

La fabrication des liants hydrauliques et notamment celle des ciments consiste essentiellement en une calcination d'un mélange de matières premières judicieusement choisies et dosées aussi désigné par le terme « cru ». La cuisson de ce cru donne un produit intermédiaire, le clinker, qui broyé avec d'éventuels ajouts minéraux donnera du ciment. Le type de ciment fabriqué dépend de la nature et des proportions des matières premières ainsi que du procédé de cuisson. On distingue plusieurs types de ciments : les ciments Portland (qui représentent la très grande majorité des ciments produits dans le monde), les ciments alumineux (ou d'aluminate de calcium), les ciments prompts naturels, les ciments sulfo-alumineux, les ciments sulfo-alumineux-bélitiques et d'autres variétés intermédiaires. Comme ces familles ne sont pas totalement disjointes, il est préférable de les décrire par leurs constituants chimiques et minéralogiques.

Dans le monde cimentier, il est d'usage d'utiliser une notation spécifique afin de décrire les constituants d'un clinker ou d'un ciment. Comme le clinker est le résultat d'une calcination à haute température, les éléments sont essentiellement présents sous forme d'oxydes.

Quel que soit le type de ciment, l'homme de l'art sera toujours confronté, lors de sa fabrication, à un double objectif : assurer la stabilité chimique du mélange de matières premières et la stabilité thermique du procédé. En effet, comme les performances attendues du ciment dépendent de la quantité et la nature des phases minéralogiques synthétisées lors de la cuisson, il est impératifs que le cru contienne les éléments nécessaires à cette synthèse et que les conditions thermiques du procédé soient propices à l'apparition et la conservation des dites phases. Cependant, ce double impératif n'est pas toujours facile à respecter car la chimie du cru a une influence sur la conduite du procédé et la minéralogie du ciment dépend de la conduite du procédé. Ces difficultés ont été en grande partie résolues empiriquement par une lente évolution du procédé de fabrication pour les ciments Portland. Cependant, si les installations industrielles les plus récentes répondent aux objectifs de production en masse des ciments Portland, elles ne permettent pas de disjoindre les influences respectives de la chimie et de la conduite du procédé.

L'invention se propose notamment de résoudre cet inconvénient.

Plus particulièrement, l'invention se rapporte à un procédé de fabrication d'un clinker sulfo-alumineux ou sulfo-alumineux-bélitique à partir d'un cru constitué par un mélange comprenant des minéraux contenant du calcium, aluminium, silice, fer et soufre, préférentiellement sous forme sulfate.

L'invention présente également un avantage en ce qui concerne la cuisson des marnes pour la fabrication des ciments prompt naturels.

Les ciments les plus répandus sont les ciments Portland. Les ciments Portland sont obtenus à partir de clinker Portland, obtenus après clinkérisation à une température de l'ordre de 1450°C d'un cru dans un four.

Les ciments sulfo-alumineux et sulfo-alumineux-bélitiques dégagent moins de CO₂ que les ciments Portland.

Une première méthode de production de clinker Portland consiste à utiliser des fours rotatifs longs aptes à assurer à la fois le séchage, le bouletage, le préchauffage, la décarbonatation puis la clinkérisation.

L'utilisation d'un four rotatif ne permet pas d'obtenir une maîtrise de la température. En effet, des variations importantes de la température peuvent apparaître dans le four, lors de la cuisson du cru.

Or, dans le cas de la réalisation d'un clinker sulfo-alumineux ou sulfo-bellitique, il est nécessaire de ne pas dépasser une température critique, de manière à éviter l'apparition de phases non désirées.

C'est ainsi par exemple que, au-delà de 1350°C, la phase C₄A₃S̅ disparaît lors de la cuisson du cru et que la phase C₁₂A₇ non désirée apparaît. En outre, une telle température provoque l'apparition de SOx, rejeté dans les fumées et formant un polluant.

Une seconde méthode, développée historiquement après la première, consiste à sécher les matières crues dans des broyeurs sécheurs ou dans des sécheurs rotatifs avec récupération des fumées pour obtenir une farine crue qui est envoyée dans une tour à cyclone appelée échangeur à cyclone, la température au bas de la tour étant de l'ordre de 800 à 850°C. Cette farine est ensuite introduite dans un four rotatif dans lequel elle subit successivement les étapes de granulation, de décarbonatation et de clinkérisation.

Afin de répondre à des contraintes de réduction de coûts et d'entretien, il est nécessaire de réduire encore la longueur du four rotatif utilisé. Pour cela, une troisième méthode de production de clinker a été développée, celle-ci consistant à ajouter un étage de précalcination situé au pied de la tour à cyclone et fournissant une énergie nécessaire à la décarbonatation, une partie de l'air destiné au refroidissement du clinker et ainsi chauffé par celui-ci étant utilisée de manière améliorer le bilan thermique.

De cette manière, la hauteur de la tour et des autres éléments dits «statiques» augmente alors que la longueur du four rotatif est réduite.

Toutefois, la hauteur importante des tours fait apparaître des problèmes de collage et d'agglomération du cru dans la zone de décarbonatation. En outre, un tel procédé de fabrication engendre une quantité importante d'émission de NOx.

Des méthodes alternatives ont été développées afin de pallier à ces inconvénients, tels que l'utilisation de lits fluidisés ou la calcination dite flash, ces méthodes offrants des solutions non satisfaisantes, du fait de leur caractère expérimental ou de leur difficulté de réglage.

Un autre procédé consiste à utiliser un four droit. Un tel procédé n'est utilisé aujourd'hui que de manière marginale, étant donné qu'il est difficile de régler l'atmosphère dans le four et d'obtenir une zone de clinkérisation uniforme. En effet, un tel four est plus adapté à des températures de chauffage faibles, de l'ordre de 1000°C, alors que la clinkérisation, dans le cadre du ciment Porland, est située à une température de l'ordre de 1450°C, comme vu précédemment.

Un autre procédé de fabrication est décrit dans le document WO 02/94732. Celui-ci consiste à traiter le cru jusqu'à clinkérisation par passage dans un four à passage, de sorte que le cru soit progressivement séché, décarbonaté puis clinkérisé.

Un tel procédé offre une importante souplesse de fonctionnement, puisqu'il est possible de faire varier le temps de séjour du cru dans la zone de clinkérisation. Il est également possible d'ajuster le profil de température en utilisant une pluralité de brûleurs répartis au niveau de la paroi de voûte et des parois latérale du four.

Toutefois, la longueur du four doit être suffisamment importante pour pouvoir réaliser chacune des étapes de séchage, décarbonatation et clinkérisation dans le même four.

Le document GB 624 032 décrit un procédé et un dispositif de fabrication d'argile expansé, selon lequel des granulés d'argile sont chauffés dans une première enceinte à une température relativement basse, de l'ordre de 800°C pour réaliser leur déshydratation. Ensuite, les granulés sont soumis, dans un four tunnel, à un chauffage rapide, pour que chaque grain comporte un volume intérieur poreux et une surface extérieure vitrifiée.

L'invention vise à remédier aux inconvénients précités en proposant un procédé de fabrication d'un clinker sulfo-alumineux ou sulfo-alumineux-bélitique qui est facile à mettre en œuvre, adapté à des températures de clinkérisation élevées, permettant de maîtriser la température de cuisson du cru lors de la réalisation du clinker, et qui est obtenu à l'aide d'une installation compacte.

A cet effet, l'invention concerne un procédé de fabrication d'un clinker tel que défini par la revendication 1.

Ainsi, la déshydratation et la décarbonatation du cru sont réalisées dans le four droit. Le cru déshydrataté et la décarbonaté est ensuite amené dans le four à passage. Etant donné que seule la clinkérisation du cru est réalisée dans le four à passage, les dimensions de ce dernier peuvent être fortement limitées par comparaison au procédé décrit dans le document WO 02/094732 mentionné ci-dessus.

L'utilisation d'un four à passage offre les avantages indiqués précédemment. En particulier, l'utilisation d'un four à passage permet de contrôler le profil de température lors de la clinkérisation, en ajustant la puissance des brûleurs ainsi que la vitesse de déplacement du cru dans le four. La température de cuisson du cru peut alors être contrôlée avec une grande précision, de l'ordre de 20°C. On garantit ainsi de ne pas dépasser une température maximale engendrant l'apparition de phases non désirées et de SOx.

Du fait de la réduction du four à passage, les dimensions de l'installation globale nécessitée pour mettre en œuvre le procédé sont réduites. Les investissements et les coûts d'entretien sont donc également limités.

En outre, les combustibles nécessaires au fonctionnement du four droit et du four à passage sont séparés.

Il est ainsi possible d'utiliser, pour le four droit, des combustibles de récupération incompatibles avec la clinkérisation, notamment du fait de leur composition et de leur température de combustion, et pour le four à passage, des combustibles plus nobles enrichis à l'oxygène par exemple.

En outre, l'utilisation de deux fours distincts permet de pouvoir dissocier les vitesses de passage dans chacun des fours, avec un débit constant adapté à la fabrication de clinker en continu. Il est par exemple possible d'augmenter le diamètre du four droit afin de diminuer la vitesse du cru dans le four droit. De cette manière, la vitesse de déshydratation et de carbonatation d'une part et la vitesse de clinkérisation d'autre part peuvent être ajustées indépendamment l'une de l'autre en fonction de la composition du cru ou du clinker à obtenir.

Le terme « four à passage » désigne aussi bien un four tunnel, dans lequel le foyer est sensiblement rectiligne, qu'un four comportant un foyer circulaire ou en forme d'anneau et équipé d'une sole mobile se présentant sous la forme d'un plateau ou disque tournant.

Selon une possibilité de l'invention, le mélange introduit dans le four droit se présente sous la forme de boulets, de granules ou de briquettes.

Les boulets ou granules peuvent être obtenus par agglomération de farine selon des techniques connues telles que le bouletage ou la granulation en assiette. Les briquettes peuvent être obtenues par extrusion.

Avantageusement, un combustible solide, tel que charbon ou du bois, est ajouté au mélange, avant son introduction dans le four droit.

De cette manière, il est possible d'atteindre une température de cru de l'ordre de 950°C à la base du four droit, de sorte que la décarbonatation du cru soit réalisée complètement dans le four droit.

Le générateur de gaz chaud du four droit peut être alimenté à l'aide de combustibles de récupération.

Selon une autre variante de réalisation, le four droit peut être alimenté en totalité ou en partie à l'aide des gaz tertiaires provenant d'un dispositif de refroidissement de clinker et/ou à l'aide des gaz chauds issus du four à passage.

Il est ainsi possible de maintenir une dépression dans le four droit de manière à aspirer les gaz chauds du four à passage. La déshydratation et la décarbonatation du cru peuvent être obtenues à l'aide des seules calories apportées par ces gaz chauds, ou avec l'aide de brûleurs additionnels équipant le four droit.

Selon une possibilité de l'invention, le mélange est chauffé dans le four droit, à une température comprise entre 900°C et 1100°C.

Selon une caractéristique de l'invention, une atmosphère réductrice ou oxydante est créée dans le foyer du four à passage.

La création d'une telle atmosphère est facilitée par les dimensions réduites du four à passage et permet d'obtenir un clinker ne perdant pas ses propriétés minérales du fait d'une variation d'atmosphère.

Avantageusement, de l'oxygène est injecté dans les brûleurs du foyer du four à passage.

Selon une forme de réalisation de l'invention, le mélange est amené par gravité du four droit aux moyens de transport.

Selon une possibilité de l'invention, le mélange issu du four droit est disposé sur une sole mobile agencée pour déplacer le mélange le long du foyer.

Le mélange n'est alors plus supporté par des rouleaux, comme cela est le cas dans le document WO 02/094732, mais par la sole mobile. Les pertes de matière, ayant lieu classiquement entre les rouleaux, sont ainsi réduites.

Selon une caractéristique de l'invention, la sole mobile se déplace le long d'un circuit fermé comportant une zone de chargement du mélange issu du four droit, une zone de chauffage du mélange et une zone de déchargement du clinker formé.

Comme vu précédemment, les dimensions d'une telle installation et en particulier du four droit, peuvent être limitées.

Selon une caractéristique de l'invention, les moyens de transport comportent une sole mobile.

Avantageusement, la sole mobile est formée par une pluralité de chariots montés sur des roues ou rouleaux pivotants agencés pour déplacer les chariots le long du foyer.

Selon une possibilité de l'invention, la sole mobile comporte une face, destinée à être en contact avec le mélange, recouverte d'un matériau réfractaire.

De préférence, le matériau réfractaire est choisi de telle manière qu'il ne réagisse pas avec le mélange à clinkériser.

Selon une forme de réalisation de l'invention, les chariots se déplacent le long d'un circuit fermé comportant une zone de chargement du mélange issu du four droit, une zone de chauffage du mélange, et une zone de déchargement du clinker formé.

Préférentiellement, l'installation comporte des moyens d'injection d'oxygène dans les brûleurs à l'intérieur du foyer.

Selon une caractéristique de l'invention, les moyens d'extraction comportent une sole mobile additionnelle, agencée en regard d'une ouverture de sortie disposée en partie basse de la cuve, de sorte que le mélange séché et décarbonaté issu de l'ouverture de sortie est amené par gravité sur la sole mobile additionnelle qui, animée d'un mouvement de va et vient et disposée selon un plan incliné par rapport au plan horizontal, dirige par gravité ledit mélange vers les moyens de transport.

De tels moyens d'extraction permettent de régler de façon précise, en fonction de la fréquence de sole mobile, la quantité de mélange amené aux moyens de transport. En outre, les risques de bouchage au niveau de la zone d'extraction du four droit sont limités.

Avantageusement, la sole mobile additionnelle est actionnée par l'intermédiaire d'un vérin.

Selon une première forme de réalisation, le four à passage est un four tunnel.

Selon une seconde forme de réalisation, le four à passage comporte un foyer circulaire ou annulaire, équipé d'une sole mobile formée par un plateau tournant.

De toute façon, l'invention sera bien comprise à l'aide de la description qui suit, en référence au dessin schématique annexé représentant, à titre d'exemples non limitatifs, plusieurs formes d'exécution de cette installation.
Figure 1 en est une vue de face ;
Figure 2 est une vue en coupe agrandie de la zone d'extraction du four droit ;
Figure 3 est une vue en coupe, de côté, du four à passage ;
Figure 4 est une en coupe de la zone de déchargement du clinker ;
Figure 5 est une vue schématique, de dessus, représentant le mouvement des chariots.
Figure 6 est une vue schématique d'une installation selon une seconde forme de réalisation ;
Figure 7 est une vue schématique, de dessus, de l'installation de la figure 6.

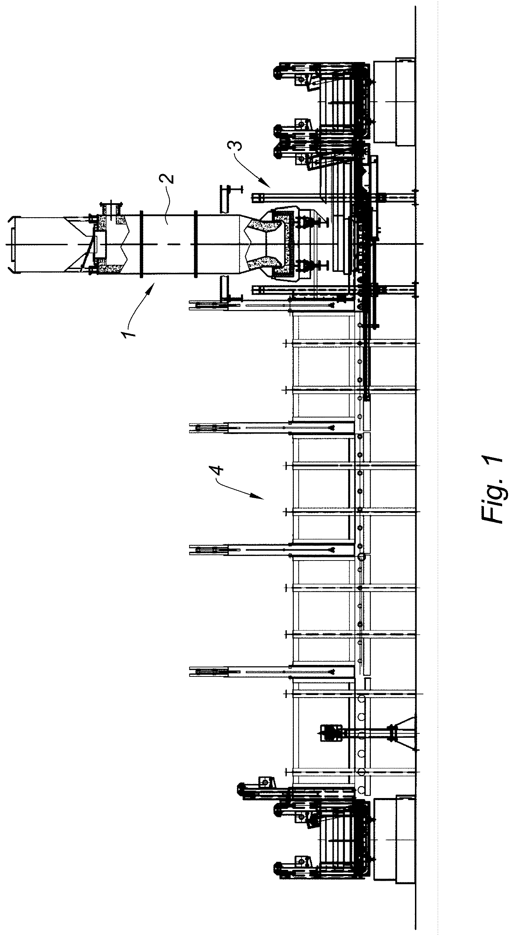

Une installation de fabrication d'un clinker selon l'invention est représentée à la figure 1.

Celle-ci comporte un four droit 1 comprenant une cuve 2 sensiblement verticale équipée de moyens d'alimentation en cru ou mélange, des moyens de chauffage dudit mélange, et des moyens d'extraction du mélange 3 disposés en partie basse de la cuve 2.

L'installation comporte en outre un four à passage 4 se présentant sous la forme d'un four tunnel, comprenant un foyer 5 équipé de brûleurs, et des moyens de transport, agencés pour recueillir le mélange issu des moyens d'extraction 3 du four droit 1 et pour transporter le mélange au travers du foyer 5, de manière à le clinkériser.

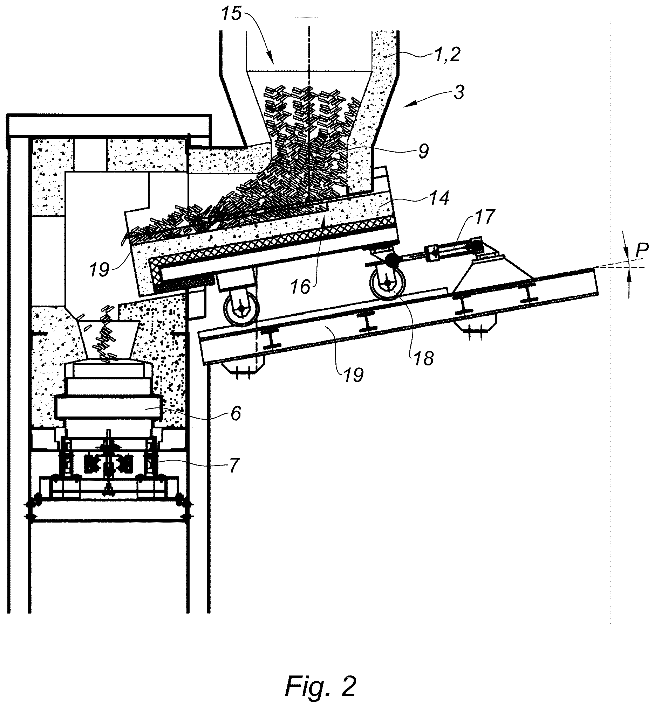

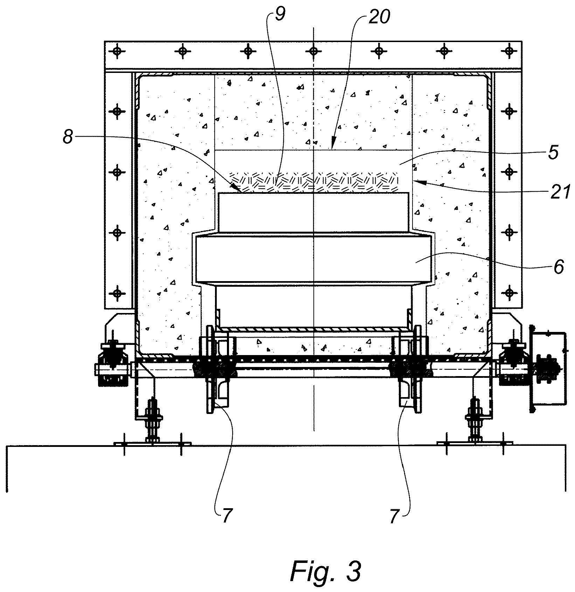

Comme cela est mieux représenté aux figures 2 et 3, les moyens de transport comportent une sole mobile formée par une pluralité de chariots 6 montés sur des roues 7 ou rouleaux pivotants agencés pour déplacer les chariots 6.

Chaque chariot 6 comporte une face 8, destinée à être en contact avec le mélange 9, recouverte d'un matériau réfractaire.

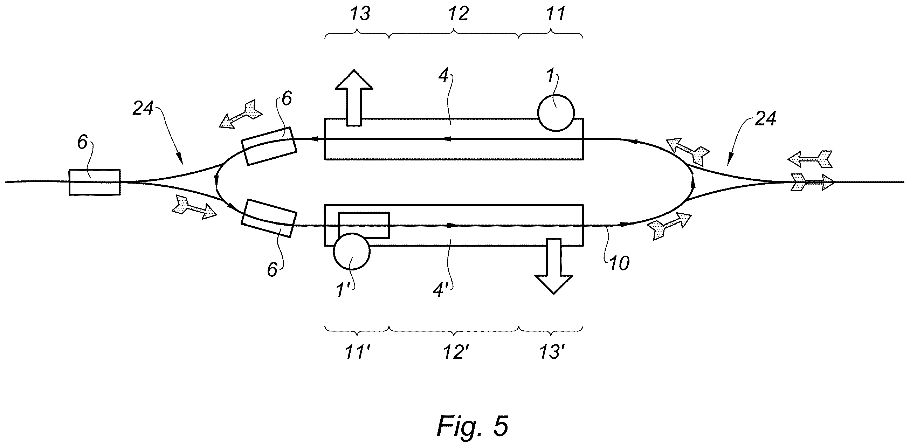

Les chariots 6 se déplacent le long d'un circuit fermé 10 (figure 5) comportant une zone de chargement 11 du mélange issu du four droit, une zone de chauffage 12 du mélange par passage dans le four à passage, et une zone de déchargement 13 du clinker formé.

Comme cela apparaît à la figure 2, les moyens d'extraction 3 comportent une sole mobile additionnelle 14, agencée en regard d'une ouverture de sortie 15 disposée en partie basse de la cuve 2, de sorte que le mélange séché et décarbonaté 9 issu de l'ouverture de sortie 15 est amené par gravité sur la sole mobile additionnelle 14.

La sole mobile additionnelle 14 présente une marche 16 au niveau de sa surface supérieure. Celle-ci est animée d'un mouvement de va et vient par l'intermédiaire d'un vérin 17 et de roues 18 montées sur des rails des guidage 19. Celle-ci est en outre disposée selon un plan P incliné par rapport au plan horizontal.

La sole mobile additionnelle 14 dirige ainsi progressivement par gravité ledit mélange 9 vers les chariots 6, en particulier vers le chariot situé en regard du bord inférieur 19 de la sole mobile 14.

Les chariots 6 sont ainsi chargés de mélange 9 au fur et à mesure de leur passage sous les moyens d'extraction 3 précités puis sont amenés dans le foyer 5 du four à passage 4.

Celui-ci comporte une pluralité de brûleurs agencés au niveau de la paroi de voûte 20 et/ou au niveau des parois latérales 21.

Le four 4 est en outre équipé de moyens d'injection d'oxygène dans les brûleurs, permettant de créer une atmosphère oxydante dans le foyer.

Le clinker, après avoir traversé la zone de chauffage 12, est éjecté par un système de va-et-vient en matériau réfractaire, par un bras fixe en matériau réfractaire, ou encore par un bras tournant faisant glisser la matière chaude dans une goulotte de liaison vers le refroidisseur.

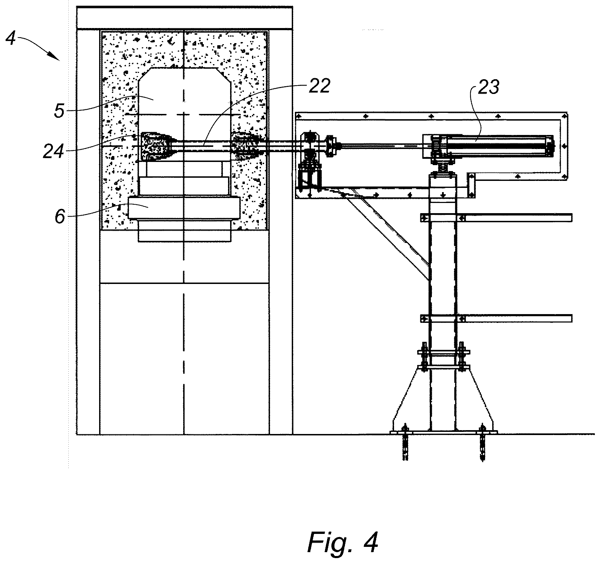

La figure 4 représente une forme de réalisation dans laquelle un bras 22 animé par un vérin 23 comporte une extrémité 24 agencée pour racler la surface de la sole de manière à retirer le clinker. Les deux positions extrêmes du bras 22, correspondant aux positions rentrée et sortie du vérin, sont représentées à la figure 4.

Le procédé de fabrication de ciment va maintenant être décrit plus en détail.

Le cru ou mélange comprend les composés CaCO₃, Al₂O₃ et/ou AI(OH)₃ CaSO₄, SiO₂ Fe₂O₃, et/ou un produit contenant de la silice ou des silicates tels que l'argile, tous ces composés étant présents sous forme anhydre ou hydratée, individuellement ou en combinaison.

Le mélange 9 introduit dans le four droit 1 se présente sous la forme de boulets ou de granules et/ou de briquettes.

Selon une variante de réalisation, un combustible solide, tel que du charbon ou du bois, est ajouté au mélange, avant son introduction dans le four droit.

Selon une autre variante de réalisation, la cuve 2 du four droit 1 est alimentée en gaz chauds, dont la température est comprise entre 900 et 1150 °C. Le générateur de gaz chaud peut par exemple être alimenté à l'aide de combustibles de récupération.

Selon une autre variante de réalisation, le four droit 1 peut être alimenté en totalité ou en partie à l'aide des airs tertiaires provenant d'un dispositif de refroidissement de clinker et/ou à l'aide des gaz chauds issus du four à passage.

L'objectif dans chacune des variantes précitées est d'amener, dans le four droit, le mélange jusqu'à une température comprise entre 900°C et 1000°C.

Ainsi, le mélange est progressivement déshydraté et décarbonaté dans le four droit 1.

Le four droit 1 est également apte à jouer le rôle de tour de dépoussiérage, celui-ci étant en outre apte à piéger le dioxyde de soufre contenu dans les fumées.

Le mélange est ensuite extrait du four droit 1 par les moyens d'extraction 3 décrits ci-dessous, amené par gravité jusqu'aux chariots mobiles 6, puis introduit dans le four à passage 4.

Les brûleurs sont agencés pour amener progressivement le mélange 9 à une température de clinkérisation comprise entre 1000°C et 1400°C. La température de flamme doit être suffisamment importante de manière à réduire le temps de clinkérisation et améliorer l'hydraulicité des clinkers.

Le temps de passage moyen du mélange dans le foyer du four à passage 4 est compris entre 15 et 40 minutes.

En outre, l'atmosphère oxydante créée dans le four permet de contrôler la qualité et la quantité des phases minérales hydrauliques du clinker.

Les produits qui peuvent être clinkérisés dans ce type de four sont très nombreux, il suffit que les réactions de clinkérisation s'effectuent en phase solide et que le collage dans la zone de clinkérisation soit industriellement acceptable. Nous ne citerons que les exemples suivants : les clinkers sulfo alumineux bélitiques avec quelques pourcents de C₄A₃S̅ à plus de 95 % de C₄A₃S̅. Les clinkers à partir de pierre naturelle pour fabriquer les ciments dits «prompts» à base de C₃A et C₁₂A₇, les clinkers bélitiques dopés pour activer l'hydratation de la bélite, et les clinkers « Portland » dopés clinkérisant à plus basse température ou non.

Le clinker ainsi obtenu est déchargé dans la zone de déchargement 13 située en aval du four à passage 4 dans le sens de circulation des chariots 6.

Le chariot correspondant 6 est ensuite à nouveau amené dans la zone de chargement 11. Pour cela, il est possible d'amener le charriot via un four à passage additionnel permettant de maintenir en température le charriot, ou par l'intermédiaire d'un robot ramenant le charriot dans une chambre isolée thermiquement.

Le temps de retour du chariot est minimisé de manière à limiter le refroidissement de la sole mobile et afin d'éviter une éventuelle dégradation du revêtement réfractaire due à un écart important de température.

La figure 4 représente schématiquement une variante de réalisation dans laquelle les chariots se déplacent suivant un circuit fermé 10 traversant successivement une première zone de déchargement 11, un premier four à passage 4, une première zone de déchargement 13 puis une seconde zone de chargement 11', un second four à passage 4' et une seconde zone de déchargement 13'.

Des systèmes d'aiguillage 24 permettent d'amener ou de retirer des chariots 6 du circuit 10.

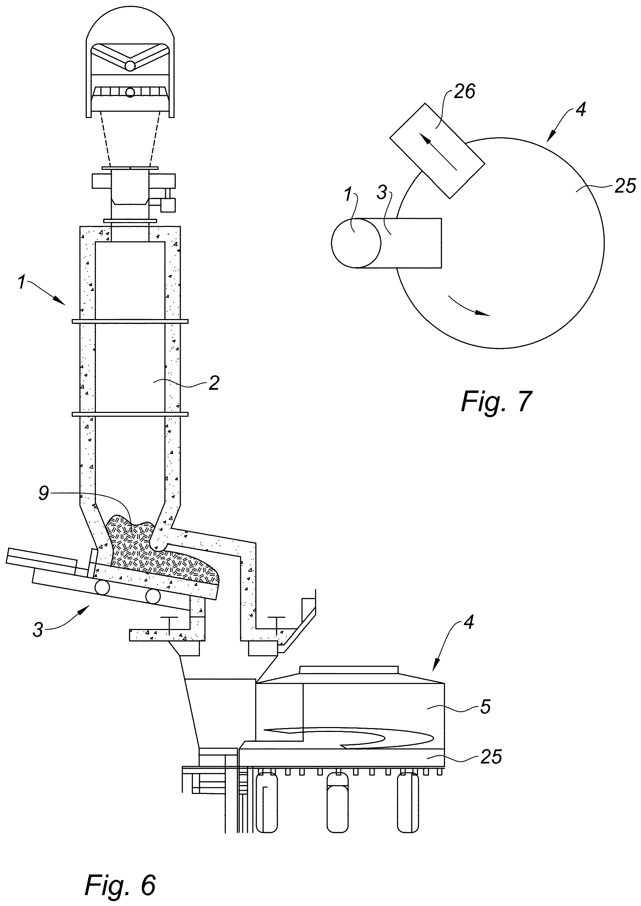

Une autre variante de réalisation de l'installation selon l'invention est représentée à la figure 6.

Dans cette variante, le four droit 1 est associé à un four à passage 4 comportant un foyer circulaire ou en forme d'anneau, le mélange 9 étant amené sur une sole mobile se présentant sous la forme d'un plateau ou disque tournant 25. Dans ce cas, comme cela est représenté à la figure 7, les moyens de déchargement 26 du clinker sont disposés au niveau de la périphérie du plateau tournant 25.

Comme il va de soi l'invention ne se limite pas aux formes de réalisation de cette installation et de ce procédé, décrites ci-dessus à titre d'exemples, mais elle embrasse au contraire toutes les variantes.

## Revendications

1. Procédé de fabrication d'un clinker sulfo-alumineux ou sulfo-alumineux-bélitique à partir d'un cru constitué par un mélange comprenant les composés Ca CO₃, Al₂O₃ et/ou Al(OH)₃, Ca SO₄, SiO₂ Fe₂O₃, tous ces composés étant présents sous forme anhydre ou hydratée, individuellement ou en combinaison, **caractérisé en ce qu'**il comporte les étapes consistant à :
- déshydrater et décarbonater, au moins en partie, le mélange par passage dans un four droit (1) comportant une cuve (2) sensiblement verticale à l'intérieur de laquelle le mélange est chauffé, la cuve (2) du four droit (1) étant alimentée en gaz chauds, dont la température est comprise entre 900 et 1 150°C;
- extraire le mélange déshydraté et décarbonaté du four droit (1) et l'amener dans un four à passage (4) comportant un foyer (5) ainsi que des moyens de transport (6) du mélange au travers du foyer (5) ;
- chauffer le mélange issu du four droit (1) à une température comprise entre 1 000 et 1 400°C, par passage dans le foyer (5), par l'intermédiaire des moyens de transport (6), de manière à obtenir une clinkérisation du mélange, le temps de passage moyen du mélange dans le foyer étant compris entre 15 et 40 minutes.

2. Procédé selon la revendication 1, **caractérisé en ce que** le mélange introduit dans le four droit (1) se présente sous la forme de boulets, de granules ou de briquettes.

3. Procédé selon l'une des revendications 1 et 2, **caractérisé en ce qu'**un combustible solide, tel que du charbon ou du bois, est ajouté au mélange, avant son introduction dans le four droit.

4. Procédé selon l'une des revendications 1 à 3, **caractérisé en ce qu'**une atmosphère réductrice ou oxydante est créée dans le foyer (5) du four à passage (4).

5. Procédé selon la revendication 4, **caractérisé en ce que** de l'oxygène est injecté dans les brûleurs du foyer du four à passage (4).

6. Procédé selon l'une des revendications 1 à 5, **caractérisé en ce que** le mélange est amené par gravité du four droit (2) aux moyens de transport (6).

7. Procédé selon l'une des revendications 1 à 6, **caractérisé en ce que** le mélange issu du four droit (1) est disposé sur une sole mobile (6) agencée pour déplacer le mélange le long du foyer.

8. Procédé selon la revendication 7, **caractérisé en ce que** la sole mobile se déplace le long d'un circuit fermé (10) comportant une zone de chargement (11) du mélange issu du four droit, une zone de chauffage (12) du mélange et une zone de déchargement (13) du clinker formé.

## Patentansprüche

1. Verfahren zur Herstellung eines Sulfoaluminat-oder eines Belit-Sulfoaluminat-Klinkers aus einer Rohmasse, die aus einer Mischung besteht, welche die Verbindungen CaCo₃, Al₂O₃ und/oder Al(Oh)₃, CaSO₄, SiO₂ Fe₂O₃ umfasst, wobei all diese Verbindungen einzeln oder kombiniert in wasserfreier oder hydratisierter Form vorhanden sind, **dadurch gekennzeichnet, dass** es die folgenden Schritte umfasst:
- wenigstens teilweises Dehydrieren und Dekarbonisieren der Mischung durch den Durchlauf eines Schachtofens (1), der einen im Wesentlichen vertikalen Behälter (2) umfasst, in dessen Inneren die Mischung erhitzt wird, wobei der Behälter (2) des Schachtofens (1) durch heiße Gase versorgt wird, deren Temperatur zwischen 900 und 1.150 °C liegt;
- Herausnehmen der dehydrierten und dekarbonisierten Mischung aus dem Schachtofen (1) und deren Befördern in einen Durchlaufofen (4), der einen Heißraum (5) sowie Mittel zum Transportieren (6) der Mischung durch den Heißraum (5) umfasst;
- Erhitzen der aus dem Schachtofen (1) kommenden Mischung auf eine Temperatur, die zwischen 1.000 und 1.400° C liegt, durch den Durchlauf eines Heißraums (5), über die Mittel zum Transportieren (6), sodass eine Verklinkerung der Mischung erreicht wird, wobei die durchschnittliche Durchlaufzeit der Mischung in dem Heißraum zwischen 15 und 40 Minuten liegt.

2. Verfahren gemäß Anspruch 1, **dadurch gekennzeichnet, dass** die in den Schachtofen (1) eingeführte Mischung die Form von Kugeln, Granulat oder Briketts aufweist.

3. Verfahren nach einem der Ansprüche 1 und 2, **dadurch gekennzeichnet, dass** der Mischung vor deren Einführung in den Schachtofen ein fester Brennstoff wie Kohle oder Holz beigefügt wird.

4. Verfahren nach einem der Ansprüche 1 bis 3, **dadurch gekennzeichnet, dass** in dem Heißraum (5) des Durchlaufofens (4) eine reduzierende oder oxidierende Atmosphäre erzeugt wird.

5. Verfahren nach Anspruch 4, **dadurch gekennzeichnet, dass** Sauerstoff in die Brenner des Heißraums des Durchlaufofens (4) eingespritzt wird.

6. Verfahren nach einem der Ansprüche 1 bis 5, **dadurch gekennzeichnet, dass** die Mischung durch Schwerkraft von dem Schachtofen (2) zu den Mitteln zum Transportieren (6) befördert wird.

7. Verfahren nach einem der Ansprüche 1 bis 6, **dadurch gekennzeichnet, dass** die aus dem Schachtofen (1) kommende Mischung auf einem Herdwagen (6) angeordnet ist, der dafür eingerichtet ist, die Mischung entlang des Heizraums zu bewegen.

8. Verfahren nach Anspruch 7, **dadurch gekennzeichnet, dass** der Herdwagen sich entlang eines geschlossenen Kreises (10) bewegt, der einen Ladebereich (11) der aus dem Schachtofen kommenden Mischung, einen Erhitzungsbereich (12) der Mischung und einen Endladungsbereich (13) des gebildeten Klinkers umfasst.

## Claims

1. A method for manufacturing a sulfoaluminous or belitic sulfoaluminous clinker from a raw mix formed by a mixture comprising Ca CO₃, Al₂O₃, and/or Al(OH)₃, CaSO₄, SiO₂ Fe₂O₃, all these compounds being present in anhydrous or hydrated form, individually or in combination, **characterized in that** it comprises the steps consisting in:
- at least partially dehydrating and decarbonating the mixture through placement in a vertical kiln (1) comprising a substantially vertical chamber (2) wherein the mixture is heated, the chamber (2) of the vertical kiln (1) being supplied with hot gases the temperature of which is between 900 and 1150°C;
- extracting the dehydrated and decarbonated mixture from the vertical kiln (1) and conveying the mixture in a continuous kiln (4) comprising a furnace (5) and transporting means (6) for transporting the mixture across the furnace (5);
- heating the mixture from the vertical kiln (1) at a temperature between 1000 and 1400°C by passing the mixture through the furnace (5) via the transporting means (6) such that a clinkerization of the mixture is obtained, the average passing time in the furnace being between 15 and 40 minutes.

2. The method according to claim 1, **characterized in that** the mixture introduced into the vertical kiln (1) assumes a form of pellets, granules or splits.

3. The method according to claim 1 or 2, **characterized in that** a solid fuel, such as coal or wood, is added to the mixture, before being introduced into the vertical kiln.

4. The method according to any one of claims 1 to 3, **characterized in that** a reducing or oxidizing atmosphere is created in the furnace (5) of the continuous kiln (4).

5. The method according to claim 4, **characterized in that** oxygen is injected into burners of the furnace of the continuous kiln (4).

6. The method according to any one of claims 1 to 5, **characterized in that** the mixture is conveyed by gravity from the vertical kiln (2) to the transporting means (6).

7. The method according to any one of claims 1 to 6, **characterized in that** the mixture from the vertical kiln (1) is arranged on a moving floor (6) arranged to move the mixture along the furnace.

8. The method according to claim 7, **characterized in that** the moving floor moves along a closed circuit (10) including an area for loading (11) the mixture from the vertical kiln, an area (12) for heating the mixture and an area (13) for unloading the clinker formed.
